**Europäisches Patentamt**

**European Patent Office**

**Office européen des brevets**

(11) Veröffentlichungsnummer : **0 101 964**
**B1**

(12) **EUROPÄISCHE PATENTSCHRIFT**

(45) Veröffentlichungstag der Patentschrift :
03.12.86

(21) Anmeldenummer : 83107552.8

(22) Anmeldetag : 01.08.83

(51) Int. Cl.⁴ : **C 09 J   3/16, C 09 J   3/14,
C 08 L 63/00**

(54) **Verfahren zum Verbinden von Karosserieblechen unter Verwendung von pastösen, vorgelierbaren, wärmehärtbaren Epoxidharz-Klebstoffen.**

(30) Priorität : 09.08.82 DE 3229657

(43) Veröffentlichungstag der Anmeldung :
07.03.84 Patentblatt 84/10

(45) Bekanntmachung des Hinweises auf die Patenterteilung : 03.12.86 Patentblatt 86/49

(84) Benannte Vertragsstaaten :
DE

(56) Entgegenhaltungen :
EP-A- 0 029 008
DE-A- 1 935 115
FR-A- 2 114 524
US-A- 2 602 785

(73) Patentinhaber : **Henkel Kommanditgesellschaft auf Aktien
Postfach 1100 Henkelstrasse 67
D-4000 Düsseldorf-Holthausen (DE)**

(72) Erfinder : **Herold, Julius, Dr.
Marie-Curie-Strasse 2
D-4019 Monheim (DE)**
Erfinder : **Stöcker, Sieglinde
Corelli-Strasse 24
D-4000 Düsseldorf 13 (DE)**

**Beschreibung**

Es ist bekannt, zum Verkleben von Metallen und dergleichen, insbesondere von noch fettige Rückstände enthaltenden Metallen, Mischungen auf Basis von Epoxidharzen zu verwenden. Als Epoxidharze kommen hier die bekannten Typen wie z. B. solche auf Basis von Umsetzungsprodukten von Diphenylolpropan mit Epichlorhydrin in Frage. Auch andere mehr als eine Epoxidgruppe im Molekül enthaltende niedermolekularen Verbindungen sind brauchbar. Diese mehr als eine Epoxidgruppe im Molekül enthaltenden Verbindungen können auch in bekannter Weise mit weiteren Hilfstoffen wie Reaktivverdünnern modifiziert sein. Außerdem enthalten derartige Mischungen in der Hitze wirksame Vernetzungsmittel, die in den flüssigen Gemischen suspendiert sind oder aber, falls es sich um pulverförmige Mischungen handelt, rein mechanisch fein verteilt vorliegen. Besondere Bedeutung haben in diesem Zusammenhang solche flüssigen Heißhärter enthaltenden Epoxidharz-Gemische, die außerdem noch thermoplastische makromolekure Stoffe enthalten. Hier kommen PVC oder Mischpolymerisate des Vinylchlorids in Frage ebenso wie Polyolefine wie Polypropylen oder Polyethylen oder Mischpolymerisate des Ethylens mit beispielsweise Acrylsäureestern oder freie Acrylsäure oder auch mit Vinylacetat.

Die Nachteile der im Stand der Technik entsprechenden pastösen, heißhärtenden, vorgelierbaren Epoxidharzklebstoffe sind unter anderem darin zu sehen, daß die Schälfestigkeit der Verklebung häufig zu wünschen übrig läßt. Auch ist häufig die Beständigkeit gegen warme und feuchte Atmosphäre nicht ausreichend, so daß die im Karosseriebau geforderten Werte nicht erreicht werden. So sollte eine Lagerung in etwa 70 °C feuchter Atmosphäre über einen Zeitraum von 2 bis 3 Wochen mit anschließendem, schockartigem Gefrieren ohne beträchtlichen Abfall der Scherfestigkeit überstanden werden. Schließlich sollte auch die Zugscherfestigkeit nicht durch etwa von der Verformung von Blechen vorhandenen fettigen Verunreinigung zu stark beeinträchtigt werden.

Daher sollten die Bleche vor dem Verkleben gereinigt und geätzt werden. Dies bedeutet einen Arbeitsgang oder sogar zwei zusätzliche Arbeitsgänge. Nach einer anderen Arbeitsweise (EP-A 29008) ölige Stahlbleche mit Kombinationen auf Basis von Epoxiden und Polyolefinen sowie Dicyandiamid erfolgreich zu verkleben, setzt man ein fettlösliches Lösungsmittel wie Limonen, Dipenten oder Terpentinöl in einer Menge von 1 bis 10 Gewichtsprozent, bezogen auf den Klebstoff, zu (vgl. FR-A-2 114 524, US-A-2 602 785, DB-A-1 935 115).

Aufgabe der vorliegenden Erfindung war es, die geschilderten Nachteile zu vermeiden und neue, möglichst universell einsetzbare, vorgelierbare Klebmittel auf Basis von Epoxidharzen zu finden.

Erfindungsgemäß werden Karosseriebleche unter Verwendung von auf Basis von bei Raumtemperatur flüssigen Epoxidharz-Systemen, die gegebenenfalls Reaktivverdünner und/oder Weichmacher enthalten können sowie in der Hitze wirksamen Härtern für Epoxidharze dadurch verbunden, daß man zwischen die nicht gereinigten Karosseriebleche ein Epoxid-Weichmacher-Härtersystem bringt, das, bezogen auf dieses System, zusätzlich enthält

a) 5 bis 30 Gewichtsprozent Polyvinylacetat bzw. Mischpolymerisaten des Vinylacetats einer Korngröße zwischen 5 und 300 µm, insbesondere 10 und 200 µm bzw.

b) 5 bis 20 Gewichtsprozent eines Polyvinylacetat-Redispersionspulvers der durchschnittlichen Korngröße 40 bis 80 µm bzw.

c) 5 bis 20 Gewichtsprozent eines teilverseiften Vinylacetat-Ethylen-Copolymerisates eine durchschnittliche Korngröße von 80 bis 200 µm bzw.

d) 5 bis 20 Gewichtsprozent eines Vinylacetat-Vinylfettsäureester-Copolymeren einer Korngröße von 5 bis 300 µm

und dann nach Vorgelierung die Aushärtung der Klebemasse vornimmt. Die Vorgelierung wird bei 90 bis 150 °C während 2 bis 10 Minuten und die endgültige Aushärtung bei 150 bis 200 °C durchgeführt.

Vorzugsweise enthalten die neuen Klebstoffe als thermoplastisches Vinylpolymerisat 5 bis 20 Gewichtsprozent eines Polyvinylacetats als Redispersionspulver mit einer durchschnittlichen Korngröße von 40 bis 80 µm. Derartige Homopolymerisate des Vinylacetats sind bekannt bzw. werden nach bekannten Verfahren hergestellt. Von ihrer Herstellung haben sie oberflächlich Schutzkolloide und unter Umständen geringe Mengen oberflächenaktiver Substanzen absorbiert. Es hat sich als notwendig erwiesen, Korngrößen unter 5 µm, insbesondere unterhalb 40 µm weitgehend auszuschließen ebenso wie die Kornfraktionen, die oberhalb von 150, insbesondere oberhalb von 80 µm liegen. Selbstverständlich können geringere Mengen anderer Korngrößen vorhanden sein, jedoch dürfen sie nicht ins Gewicht fallen, das heißt ihr Anteil soll unterhalb von 5 %, insbesondere unterhalb von 1 % des eingesetzten Homopolymerisats des Vinylacetats liegen.

Außer den genannten Homopolymerisaten des Vinylacetats können auch andere thermoplastische Copolymerisate vorhanden sein. Hier bietet sich als Comonomeres das Ethylen oder auch das Propylen an. Gute Resultate werden erzielt, wenn neben Vinylacetat etwa 10 bis 60 % Ethylen einpolymerisiert sind und von den vorhandenen Acetatgruppierungen ein Teil verseift ist. Der Verseifungsgrad soll relativ hoch liegen und 60 %, insbesondere 80 % der ursprünglich vorhandenen Acetatgruppen übersteigen. Im Fall dieser Copolymerisate kann die Korngröße etwas höher liegen, und zwar zwischen etwa 50 und 250 µm, insbesondere aber zwischen 80 und 200 µm.

Eine weitere bevorzugte Gruppe von geeigneten thermoplastischen Vinylpolymerisaten, welche ebenfalls in einer Menge von 5 bis 20 Gewichtsprozent vorliegen können, sind die Mischpolymerisate des Vinylacetats mit Vinylfettsäureestern. Die Korngröße bei diesen Polymerisaten kann noch in weiteren Grenzen schwanken und soll zwischen 5 und 300 μm liegen. Auch hier ist ein mittlerer Bereich bevorzugt, wobei das Maximum etwa zwischen 80 und 200 μm liegt.

Die erfindungsgemäßen neuen Klebstoffe können weiterhin bestimmte flüssige Epoxidharze enthalten, insbesondere solche auf Basis von Diphenylolpropan oder auch auf Basis von mit Epichlorhydrin umgesetzten Kondensaten von Phenol bzw. Resorcin mit Formaldehyd. Falls die Viskosität bei 20 bis 25 °C für eine Verarbeitung zu hoch liegt, fügt man den Epoxidharzen sogenannte Reaktivverdünner bzw. weitere tiefschmelzende Harze zu. Der Anteil der Epoxidharze kann zwischen etwa 25 und 55 Gewichtsprozent, bezogen auf die gesamte Zusammensetzung des Klebstoffs, liegen.

Zusätzlich oder anstelle der Reaktivverdünner kann man den Epoxidharzen zur Viskositätsreduktion auch geeignete Weichmacher zufügen. In Frage kommen hier Weichmacher auf Basis von niedermolekularen Polyestern, wie sie durch Veresterung mehrbasischer Carbonsäuren, insbesondere Dicarbonsäuren wie Phthalsäure, Terephthalsäure, Adipinsäure, Sebacinsäure und dgl. mit niedermolekularen Alkoholen wie Ethylenglykol, Diethylenglykol oder auch Propylenglykol herstellbar und handelsüblich sind. Neben diesen sogenannten Polyesterweichmachern kommen auch andere auf Basis von Fettsäureestern in Frage wie etwa epoxidiertes Sojaöl und dergleichen mehr. Ferner sind als Zusatz auch andere niedermolekulare Weichmacher geeignet wie etwa das Dioctylphthalat, insbesondere das Di-ethylhexylphthalat und andere mehr. Auswahl und Mengen des Weichmachers können das Eigenschaftsbild des ausgehärteten Epoxidharzes erheblich beeinflussen. Ein hoher Anteil führt zu elastischen und ein geringer zu Verbindungen mit höherer innerer Festigkeit.

Der prozentuale Anteil an Epoxidharz-Härter-System, Reaktivverdünner und Weichmacher bewegt sich zwischen 70 und 95 Gewichtsteilen, bezogen auf das Gesamtsystem, wobei wegen der stets etwas variierbaren Mengen an Hilfsstoffen diese nicht in die Berechnung einbezogen werden.

Als weiteren wesentlichen Bestandteil enthalten die Mischungen in der Hitze, und zwar im wesentlichen oberhalb von 150 °C wirksame Härter bzw. Vernetzungsmittel für die sogenannten Epoxidharze. Hier ist in erster Linie das Dicyandiamid zu nennen. Außer dem Dicyandiamid können selbstverständlich andere Heißhärter eingesetzt werden wie etwa hochschmelzendes Polycarbonsäureanhydrid wie Pyromellithsäuredianhydrid oder Hexachlormethylentetrahydrophthalsäureanhydrid und ähnliche mehr.

Zur Verbesserung der Haftung auf ungereinigten, noch ölige Rückstände enthaltenden Blechen sind hochsiedende Komponenten, die insbesondere noch Doppelbindungen enthalten, wie Ester der Ölsäure oder Linolsäure sowie Acryl- oder Methacrylsäureester von Dimethyloldicyclopentadien geeignet.

Es hat sich außerdem als zweckmäßig erwiesen, den Klebstoffen noch Füllstoffe zuzusetzen wie etwa Kieselsäure sowohl durch Dampfphasenhydrolyse gewonnene Kielselsäure oder gefällte Kieselsäure als auch Silikate wie etwa Natriumaluminiumsilikat oder auch natürliche Füllmittel wie etwa Wollastonit, gegebenenfalls silanisiert oder fein gemahlener Dolomit sowie hochschmelzende Faserstoffe auf Basis von Polyestern. Ebenso ist der Zusatz von Glasfasern oder Mineralfasern möglich. Durch diese Zusätze wird die innere Festigkeit der ausgehärteten Klebstoffe verbessert und das gewünschte Fließverhalten eingestellt. Besonders vorteilhaft für Fließverhalten und Festigkeit ist der Zusatz geringer Mengen an pyrogener Kieselsäure. Die Füllstoffe können in weiten Grenzen variiert werden, wobei im allgemeinen nur relativ geringe Mengen zwischen 5 und 30 %, bezogen auf die übrigen Bestandteile, eingesetzt werden sollten. Durch darüber liegende Mengen können die Eigenschaften der Systeme erheblich verändert werden.

Es wurde gefunden, daß die Korngröße ein wesentliches Kriterium für die Thermoplasten ist, die man gemäß vorliegender Erfindung einsetzen kann. So hat es sich herausgestellt, daß Polymerisate, deren Korngrößenspektrum zwischen 1 und 5 μm liegt, ungeeignet sind. Auch wenn die Korngröße 300 μm erheblich überschreitet, werden keine guten Klebmittel mehr erhalten.

Die Herstellung der neuen Klebstoffe erfolgt in der Weise, daß alle Bestandteile in einem Mischer zusammengegeben werden und bei Zimmertemperatur oder bei Temperaturen bis zu maximal 80 °C so lange gemischt werden, bis eine völlig homogene Verteilung vorliegt. Bei hoher Viskosität des Epoxidharzes bzw. einem Schmelzpunkt oberhalb etwa 15 °C wird vor dem eigentlichen Mischen das Epoxidharz mit Reaktivverdünner und/oder Weichmacher bei 70 bis 120 °C in einem flüssigen Zustand überführt. Dazu benötigt man im allgemeinen zwischen 5 und 30 Min. Nach dieser Zeit kann der Klebstoff abgefüllt werden und in geeigneter Weise aus. Kartuschen oder Spritzpistolen auf die zu verklebenden Teile aufgebracht werden. Nach dem Fügen der Teile kann man dann bei Temperaturen zwischen etwa 90 und 150 °C während 2 bis 10 Min. ein Vorgelieren durchführen. Mit diesem Vorgelieren bzw. der damit verbundenen Vorhärtung wird Beständigkeit gegen Waschbadflüssigkeiten erreicht, wie sie beispielsweise in der Automobilindustrie vor dem Lackieren verwendet werden. Die endgültige Aushärtung verläuft bei Temperaturen zwischen 150 und 200 °C. Je nach Rezeptur durchläuft der Klebstoff dabei einen relativ niedrig viskosen Zustand, bei dem Hohlräume ausgefüllt werden können. Andererseits kann die Vorgelierung und Aushärtung so erfolgen, daß die Masse auch an senkrechten Flächen stehenbleibt. Es erfolgt somit bei geeigneter Rezeptur kein Ablaufen oder das Bilden von sogenannten Tropfnasen.

Erfindungsgemäß können die Klebstoffe verwendet werden zum Verbinden von Metallblechen,

**0 101 964**

insbesondere auch aus nicht gereinigten oder nicht vorbehandelten Karosserieblechen. Diese Stahlbleche enthalten von der vorausgegangenen Formung her meist noch ölige Rückstände. Einwandfreie Haftung wird auch auf Aluminium, verzinktem Stahl und mit einem « Elektro-coating » versehenem Stahl erzielt. Selbstverständlich können auch andere Werkstoffe wie Kunststoffe, mineralische Werkstoffe und dergleichen verklebt werden, sofern die Temperaturbelastung während des Härtungsvorgangs nicht zu unerwünschten Veränderungen führt.

### Beispiele

### Beispiel 1

42 Gew.% Epoxidharz auf Basis von Diphenylolpropan (Epoxidäquivalent = 475 g)
42 Gew.% Polyadipat (Ultramoll III)
10 Gew.% Polyvinylacetat (Korngröße 40-80 μm, Dispersionspulver)
4 Gew.% Dicyandiamid
2 Gew.% pyrogene Kieselsäure

In einem beheizbaren Mischaggregat wurde das Epoxidharz bei 100 °C im Weichmacher gelöst, bis eine homogene, klare Flüssigkeit entstanden war. Nach Abkühlen auf 25 °C wurden die weiteren Komponenten zugegeben.

### Beispiel 2

30 Gew.% Epoxidharz auf Basis von Diphenylolpropan (Epoxidäquivalent = 475 g)
47 Gew.% epoxidiertes Leinöl
8,6 Gew.% Polyvinylacetat (Korngröße 40-80 μm, Dispersionspulver)
3,0 Gew.% Dicyandiamid
1,4 Gew.% pyrogene Kieselsäure
3,4 Gew.% Polyester-Kurzschnittfaser
5,1 Gew.% Wollastonit, silanisiert
1,5 Gew.% Wollastonit

Die Herstellung des Klebstoffes erfolgte wie in Beispiel 1 beschrieben.

### Beispiel 3

78 Gew.% Epoxidharz auf Basis von Diphenylolpropan, zu 24 Gew.% mit Kresylglycidylether verdünnt (Epoxidäquivalent = 187 g)
12 Gew.% teilverseiftes Vinylacetat-Ethylen-Copolymeres (Korngröße 80-200 μm, Wirbelsinterpulver)
8 Gew.% Dicyandiamid
2 Gew.% pyrogene Kielsäure
Die Komponenten wurden bei 25 °C in einem nicht beheizten Mischer homogenisiert.

### Beispiel 4

78 Gew.% Epoxidharz auf Basis von Diphenylolpropan, zu 24 Gew.% mit Kresylglycidylether verdünnt (Epoxidäquivalent = 187 g)
12 Gew.% Vinylacetat-Vinylfettsäureester-Copolymeres (Korngröße 5-300 μm, Dispersionspulver)
8 Gew.% Dicyandiamid
2 Gew.% pyrogene Kieselsäure

Das Vermischen erfolgte bei 25 °C wie in Beispiel 3 beschrieben.

### Beispiel 5

70 Gew.% Epoxidharz auf Basis von Diphenylolpropan, zu 24 Gew.% mit Kresylglycidylether verdünnt (Epoxidäquivalent = 187 g)
10 Gew.% Vinylacetat-Vinylfettsäureester-Copolymeres (Korngröße 5-300 μm, Dispersionspulver)
7 Gew.% Dicyandiamid
2,3 Gew.% pyrogene Kieselsäure
3,7 Gew.% Wollastonit, silanisiert
6 Gew.% Wollastonit
1 Gew.% Di-2-ethyl-hexyl-phthalat

Die Komponenten wurden bei 25 °C vermischt wie in Beispiel 3 beschrieben.

4

Prüfung auf Korrosionsbeständigkeit :

Mit der wie vorstehend beschriebenen hergestellten Mischung wurden Verklebungen an 15 Stahlblechen (noch verölt) durchgeführt und 10 davon einem Klimatest unterzogen.

10 Blechverklebungen wurden einer Belastung in einer 70 °C warmen Atmosphäre (100 % relative Feuchte) während 7 bzw. 14 Tagen ausgesetzt. Dann wurde während 1 Stunde bei — 25 °C aufbewahrt, auf Zimmertemperatur erwärmt und die durchschnittliche Scherfestigkeit (jeweils 5 Proben) ermittelt :

| | |
|---|---|
| Ausgangswert | 12,5 N/cm$^2$ |
| nach 7 Tagen | 11,2 N/cm$^2$ |
| nach 14 Tagen | 11,0 N/cm$^2$ |

Festigkeitsprüfung an Verklebungen, die nach den Mischungen 1 bis 5 hergestellt wurden.

In Tabelle 1 sind neben der laufenden Nummer der Beispiele die nach DIN 53 283 gemessene Zugscherfestigkeit in N/mm$^2$ von mit dem entsprechenden Klebstoff verklebten Aluminiumblechen und von geölten Stahlblechen, ferner die nach DIN 53 282 bestimmte Winkelschälfestigkeit in N/cm von Stahlblechverklebungen aufgeführt.

Tabelle 1

| Bei-spiel | Zugscherfestigkeit an Aluminium | Zugscher-festigkeit an geöltem Stahlblech N/mm$^2$ | Winkelschäl-festigkeit an geöltem Stahl-blech N/cm |
|---|---|---|---|
| 1 | 3,8 | 3,5 | 40/15 |
| 2 | 6,3 | 5,9 | 60/25 |
| 3 | 13,0 | 10,5 | 450/35 |
| 4 | 14,0 | 11,4 | 420/38 |
| 5 | 17,0 | 12,5 | 450/37 |

**Patentansprüche**

1. Verfahren zum Verbinden von Karosserieblechen und unter Verwendung von auf Basis von bei Raumtemperatur flüssigen Epoxidharz-Systemen, die gegebenenfalls Reaktivverdünner und/oder Weichmacher enthalten können sowie in der Hitze wirksame Härter für Epoxidharze, dadurch gekennzeichnet, daß man zwischen die nicht gereinigten Karosseriebleche ein Epoxid-Weichmacher-Härtersystem bringt, das bezogen auf dieses System zusätzlich enthält

a) 5 bis 30 Gewichtsprozent Polyvinylacetat bzw. Mischpolymerisaten des Vinlacetats einer Korngröße zwischen 5 und 300 μm, insbesondere 10 und 200 μm bzw.

b) 5 bis 20 Gewichtsprozent eines Polyvinylacetat-Redispersionspulvers der durchschnittlichen Korngröße 40 bis 80 μm bzw.

c) 5 bis 20 Gewichtsprozent eines teilverseiften Vinylacetat-Ethylen-Copolymerisates einer durchschnittlichen Korngröße von 80 bis 200 μm bzw.

d) 5 bis 20 Gewichtsprozent eines Vinylacetat-Vinylfettsäureester-Copolymeren einer Korngröße von 5 bis 300 μm

und dann die Vorgelierung und Aushärtung der Klebemasse vornimmt.

2. Verfahren nach Anspruch 1, dadurch gekennzeichnet, daß man die Aushärtung der Klebmasse in zwei Stufen vornimmt, wobei die erste Stufe als Vorgelierung bei 90 bis 150 °C während 2 bis 10 Minuten und die endgültige Aushärtung bei 150 bis 200 °C vorgenommen wird.

**Claims**

1. A process for bonding bodywork panels using adhesives based on epoxy resin systems liquid at

5

room temperature which may optionally contain reactive diluents and/or plasticizers and heat-activated epoxy resin hardeners, characterized in that an epoxy resin-plasticizer-hardener system additionally containing — based on this system —

a) from 5 to 30 % by weight polyvinylacetate or copolymers of vinylacetate having a grain size of from 5 to 300 μm and more especially from 10 to 200 μm or

b) from 5 to 20 % by weight of a polyvinylacetate redispersion powder having a grain size of from 40 to 80 μm or

c) from 5 to 20 % by weight of a partially hydrolyzed vinylacetate-ethylene copolymer having an average grain size of from 80 to 200 μm or

d) from 5 to 20 % by weight of a vinylacetate-vinyl fatty acid ester copolymer having a grain size of from 5 to 300 μm

is applied between the non-cleaned bodywork panels, after which the adhesive is pregelled and cured.

2. A process as claimed in Claim 1, characterized in that the adhesive is cured in two stages, the first stage being carried out as pregelation for 2 to 10 minutes at 90 to 150 °C and final curing being carried out at 150 to 200 °C.

**Revendications**

1. Procédé de liaison de tôles de carrosserie mettant en œuvre des systèmes adhésifs à base de résine époxyde fluide à température ambiante, qui peuvent contenir le cas échéant des diluants de réactifs et/ou des plastifiants ainsi que des durcisseurs de résine époxyde, actifs à chaud, caractérisé en ce qu'on met en place entre les tôles de carrosserie non nettoyées un système époxyde plastifiant-durcisseur qui par rapport à ce système contient

a) 5 à 30 % en poids d'acétate de polyvinyle ou de copolymère d'acétate de vinyle de granularité comprise entre 5 et 300 μm, en particulier 10 et 200 μm, ou

b) 5 à 20 % en poids d'une poudre de redispersion d'acétate de polyvinyle de granularité moyenne 40 à 80 μm, ou

c) 5 à 20 % en poids d'un copolymère d'éthylène-acétate de vinyle de granularité moyenne 80 à 200 μm, ou

d) 5 à 20 % en poids d'un copolymère d'acide gras vinylique-acétate de vinyle de granularité 5 à 300 μm

et on entreprend ensuite la prégélification et le durcissement de la masse adhésive

2. Procédé suivant la revendication 1, caractérisé en ce qu'on entreprend le durcissement de la masse adhésive en deux étapes dont la première consiste en une prégélification à 90-150 °C pendant 2 à 10 minutes et le durcissement définitif a lieu à 150-200 °C.